# EUROPEAN PATENT APPLICATION

(11) **EP 4 410 488 A1**
(43) Date of publication of application: **07.08.2024**
(21) Application number: 22817515.4
(22) Date of filing: 12.12.2022
(51) Int. Cl.: B25B 23/147, B25F 5/00, G01L 5/24, G05D 17/02, H04N 9/31, G03B 29/00, G03B 21/28

(54) **TORQUE WRENCH**

(71) Applicant: Boltingmaster Co., Ltd, Suncheon-si, Jeollanam-do 58019 (KR)
(72) Inventor: The designation of the inventor has not yet been filed
(74) Representative: Isarpatent
(86) International application number: PCT/KR2022/020112
(87) International publication number: WO 2024/128325

(57) **Abstract**

The present invention provides a torque wrench whereby a measured torque value can be displayed and provided in real time through a display module or an optical projection method by mounting, inside of the torque wrench, a sensor and an electronic circuit device capable of detecting an output torque value.

## Description

### [Technical Field]

The teachings in accordance with exemplary and non-limiting embodiments of this invention generally relate to a torque wrench, and more particularly, to a torque wrench configured to provide an output torque value in real time.

### [Background Art of the Invention]

Generally, a torque wrench may be classified into a hydraulic torque wrench and an electric driven torque wrench. A torque wrench, which is a tool fastening (tightening) a bolt with a target output torque value using a hydraulic or an electric power, is widely used for bolt fastening of various structures installed in industrial sites, including, but not limited to, power plants, petrochemical plants, construction sites, automobile manufacturing, shipbuilding and railroad sites. In the industrial sites, the bolt fastening works are carried out under thorough managements based on standard and theoretical calculations, by setting, as target torque values during bolt fastening, torque values for each facility determined by a long time trials and errors.

The torque wrenches are always exposed to changes in output torque values due to variables based on frictions and changes in work conditions at sites. However, because the torque wrenches cannot be coped with by checking the output torque values in real time, regular or irregular testing and calibrations for coping therewith are very important, such that the torque wrenches generally receive periodic tests and calibrations for a 3-month, 6-month and 12-month period or periodic tests and calibrations under special schedules, depending on job descriptions and use frequency.

Although the tests and calibrations of output torque values of the said torque wrenches require lots of expenses and times, the reality is that it is inevitable to implement the tests and calibrations for the life of work facilities and the prevention of accidents.

As such, the loosening or destruction of bolts caused by incorrect output torque values of torque wrenches used for a certain period of time can be a financial and environmental disaster at industrial sites, so it is urgently required to develop a technology that can maintain safety and durability of facilities and products by checking the output torque values in real time to immediately respond to errors in the torque values.

Furthermore, changes in the output torque values may be generated in response to changes in working environments, including but not limited to, worker changes, and even in this case, it is also necessary to be able to check and respond in real time to the torque values outputted from torque wrenches, and to develop a technology to obtain the output torque values with real-time digital data in preparation for loT services.

### [Detailed Description of the Invention]

### [Technical Subject]

The present invention is provided to solve the aforementioned problems and it is an object of the present invention to provide a torque wrench configured to display and provide a measured torque value in real time through a display module or an optical projection method by mounting, inside of the torque wrench, a sensor and an electronic circuit device capable of detecting an output torque value.

Furthermore, according to the present invention, a worker can check an output torque value in real time during bolt or nut fastening (tightening) using a torque wrench to enable an immediate field (on-site) response so that the output torque value can be maintained at the same level as a target torque value set differently depending on the work facility.

### [Technical Solution]

In one general aspect of the present invention, there may be provided a torque wrench, comprising:
a main body part 110 mounted at an inner accommodation space with a driving motor part 150;
a handle part 120 formed by being extended downward of the main body part;
a battery part 130 attachably and detachably coupled to a bottom surface direction of the handle part;
a gear box 140 transmitting the motor output to a bolting driver 145 by increasing or decreasing a motor output of the driving motor part while being dynamically coupled to a motor shaft of the driving motor part at a front of the main body part;
a torque measuring part 155 measuring a torque value based on motor rotation of the driving motor part;
a display part 170 so disposed as to display, on a screen, a real time torque value measured by the torque measuring part; and
a controller 160 controlling the driving of the driving motor part 150 and the display part 170.

A display panel of the display part 170 in the exemplary embodiment of the present invention may be disposed on a central portion corresponding to a position of the handle part 120 at an upper surface region of the main body part 110.

### [Advantageous Effects]

Teachings in accordance with the exemplary embodiments of this invention may have an advantageous effect in that a measured torque value can be displayed and provided in real time through a display module or an optical projection method by mounting, inside of the torque wrench, a sensor and an electronic circuit device capable of detecting an output torque value.

Furthermore, teachings in accordance with the exemplary embodiments of this invention may have another advantageous effect in that a worker can check an output torque value in real time during bolt or nut fastening (tightening) using the torque wrench to enable an immediate field (on-site) response so that the output torque value can be maintained at the same level as a target torque value set differently depending on the work facility.

### [Brief Description of Drawings]

FIG. 1 is a perspective view illustrating an exterior look of a torque wrench according to an exemplary embodiment of the present invention.
FIG. 2 is a top view seen from an upper surface of the torque wrench of FIG. 1.
FIG. 3 is a lateral view seen from a lateral surface of torque wrench of FIG. 1.
FIG. 4 is a block diagram of a torque wrench according to an exemplary embodiment of the present invention.
FIG. 5 is a schematic view explaining a configuration of a projection part applied to the torque wrench according to an exemplary embodiment of the present invention.

### [Summary of the Invention]

The present invention may be embodied in many different modifications and alterations and have several exemplary embodiments, where specific exemplary embodiments will be exemplified through drawings which are to be described in details in the detailed descriptions. However, it should be appreciated that the present invention is not intended to be limited to particular exemplary embodiments but to encompass all equivalent alterations and/or modifications within the scope and spirit of the present invention.

In describing the present invention, detailed descriptions of constructions or processes known in the art may be omitted to avoid obscuring appreciation of the invention with unnecessary detail regarding such known constructions and functions. Furthermore, although the numerical terms (e.g., first, second, etc.) may be used herein to describe various elements, these elements should not be limited by these terms. These terms are simply identification symbols to distinguish one element from another element.

Throughout the specification, although when it is mentioned that an element is referred to as being "connected to," or "coupled to" another element, it may be directly connected or coupled to the other element, it should be also understood that intervening elements may be present therebetween unless explicitly described to the contrary.

Now, exemplary embodiments of the present invention will be described in detail with reference to the accompanying drawings.

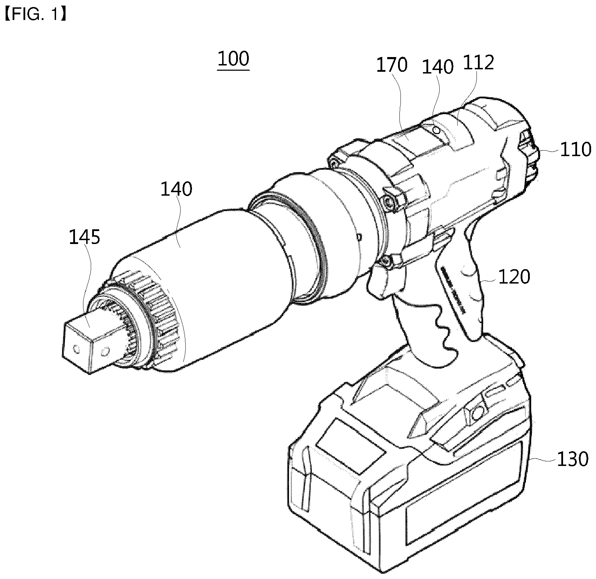

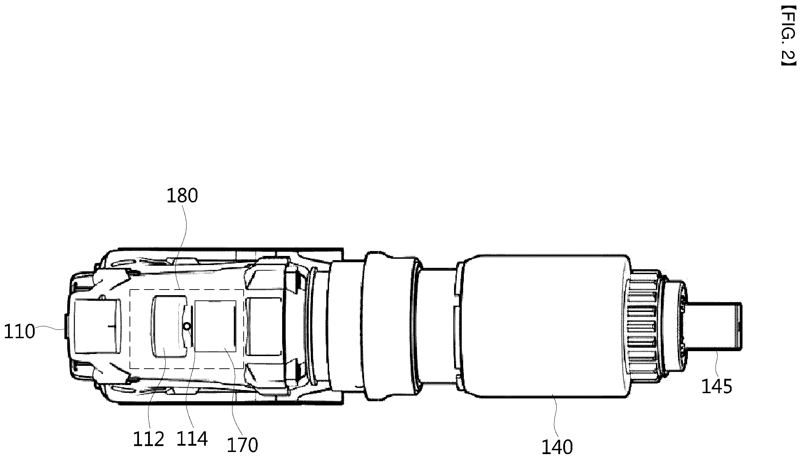

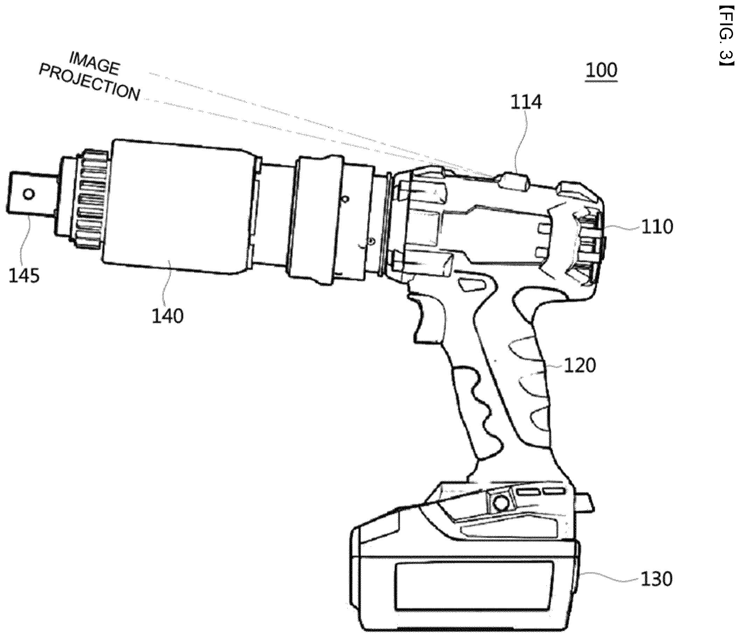

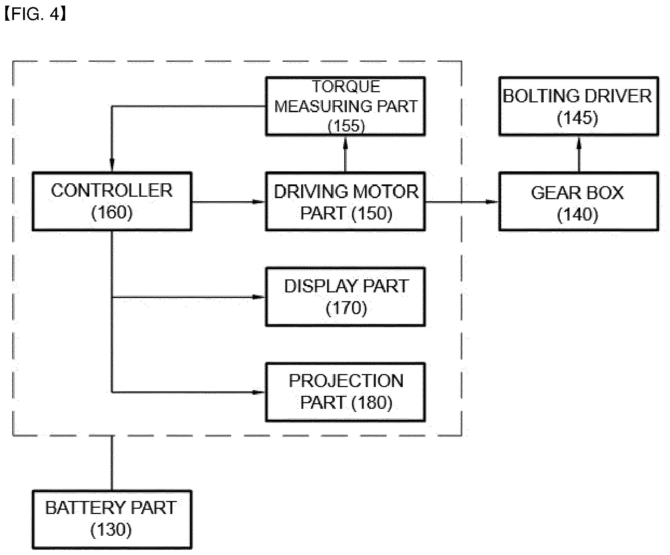

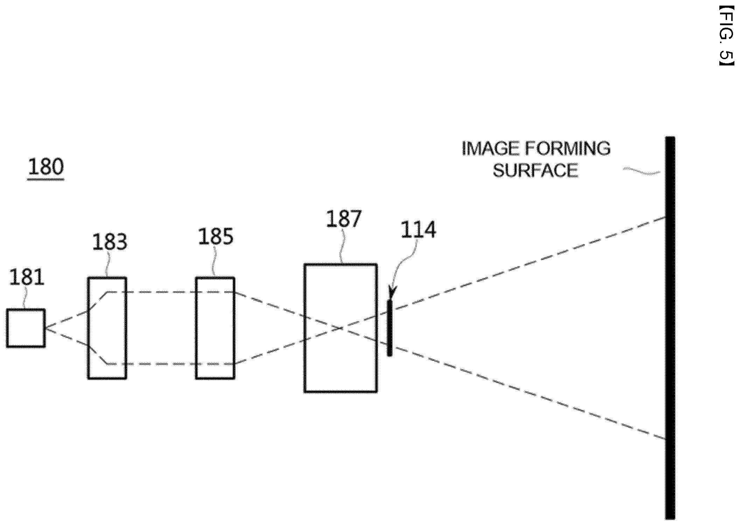

Here, FIG. 1 is a perspective view illustrating an exterior look of a torque wrench according to an exemplary embodiment of the present invention, FIG. 2 is a top view seen from an upper surface of the torque wrench of FIG. 1, FIG. 3 is a lateral view seen from a lateral surface of torque wrench of FIG. 1, FIG. 4 is a block diagram of a torque wrench according to an exemplary embodiment of the present invention, and FIG. 5 is a schematic view explaining a configuration of a projection part applied to the torque wrench according to an exemplary embodiment of the present invention.

Referring to FIGS. 1 ~ 5, a torque wrench 100 according to an exemplary embodiment of the present invention may include: a main body part 110 mounted at an inner accommodation space with a driving motor part 150; a handle part 120 formed by being extended downward of the main body part; a battery part 130 attachably and detachably coupled to a bottom surface direction of the handle part; a gear box 140 transmitting the motor output to a bolting driver 145 by increasing or decreasing a motor output of the driving motor part while being dynamically coupled to a motor shaft of the driving motor part at a front of the main body part; a torque measuring part 155 measuring a torque value based on motor rotation of the driving motor part; a display part 170 so disposed as to display, on a screen, a real time torque value measured by the torque measuring part; and a controller 160 controlling the driving of the driving motor part 150 and the display part 170.

The driving motor part 150 according to an exemplary embodiment of the present invention may be formed by including an electric motor and a motor driver. Here, the motor driver may control the driving of the electric motor in response to a motor driving signal transmitted from the controller 160.

The bolting driver 145 may mean a physical driver for bolting of a specific object which is a bolting target. The bolting driver 145 may include a front part (see a square shaped portion of FIG. 1) to be used for an actual bolting operation and a rear part (see a tooth shaped portion at an outer circumference of FIG. 1) for being coupled with the gear box 140.

A non-contact type torque sensor or a contact type torque sensor may be used for the torque measuring part 155 according to an exemplary embodiment of the present invention. Here, a Hall sensor or the like may be used for the non-contact type torque sensor. Furthermore, here, a strain gauge or the like may be used for the contact type torque sensor.

The contact type torque sensor, when used here as an example, may be disposed at a predetermined position where rotation of a motor rotation shaft of the electric motor can be detected.

As another example, the contact type torque sensor may be disposed at a predetermined position where rotation of the bolting driving 145 can be detected. For example, the contact type torque sensor may measure a real time torque value by being disposed on an inner accommodation space provided at an inside of the said rear part (i.e., a portion where coupling is realized with the gear box 140) of the bolting driver 145. In this case, a communication module (not shown) may be also disposed in the said inner accommodation space for data-transmitting a real time torque value measured from the torque sensor to the controller 160.

However, there is no requirement to realize the torque measuring part 155 in a sensor type, and, when necessary, a method of calculating a torque value at a relevant point may be used based on a motor driving signal of the controller 160 or an output signal of the motor driver.

The real time torque value measured by the torque measuring part 155 may be inspected in real time by a worker if the bolting operation has been implemented in response to a target torque value by displaying the real time torque value on the display part 170 in response to a display driving signal of the controller 160.

Here, the display part 170 may include a display panel and a display driving driver. The display panel of the display part 170 according to an exemplary embodiment of the present invention may be disposed on a central portion corresponding to a position of the handle part 120 at an upper surface region of the main body part 110.

As elaborated in the foregoing, when the torque wrench 100 according to an exemplary embodiment of the present invention is used, an output torque value can be checked in real time during bolt or nut fastening (tightening) to enable an immediate field (on-site) response so that the output torque value can be maintained at the same level as a target torque value set differently depending on the work facility.

Furthermore, the torque wrench 100 according to an exemplary embodiment of the present invention may further include a projection part 180 disposed at an inner accommodation space of the main body part 110 for image-projecting the real time torque value measured by the torque measuring part on a predetermined outside image forming surface.

As illustrated in FIG. 5, the projection part 180 according to an exemplary embodiment of the present invention may be formed by including: a light source 181 emitting a light in response to a light source control signal transmitted from the controller 160; a collimator 183 receiving the light emitted from the light source 181, enlarging the received light by a predetermined ratio, and modulating the enlarged received light to a parallel light; a two-dimensional spatial light modulator 185 disposed with a plurality of two-dimensional micro-mirrors driven by the modulated control signal transmitted from the controller 160 by receiving the parallel light emitted from the collimator 183 to thereby perform a light modulation for optical projection of the torque value; and a projection lens 187 projecting the modulated light emitted from the two-dimensional spatial light modulator 185 to an outside through an aperture 114.

At this time, as illustrated in FIGS. 1~ 3, the aperture 114 may be provided on a front center of a staircase part 112 protrusively formed at a rear surface of a display panel-disposed portion in an upper surface region of the main body part 110.

As elaborated in the foregoing, when the torque wrench 100 according to the exemplary embodiment of the present invention is used, and when it is difficult to check the torque value image-projected on a predetermined outside image forming surface by the projection part 180 depending on work situations, an immediate field response can be implemented by the projection part 180 through ascertainment of torque value image-projected on a predetermined outside image forming surface.

Although the present invention has been explained so far with reference to the exemplary embodiments, it will be easily understood that various changes and modifications might be made by those skilled in the art without departing from the scope and idea of the invention as expressed in the following claims.

## Claims

1. A torque wrench comprising:
a main body part 110 mounted at an inner accommodation space with a driving motor part 150;
a handle part 120 formed by being extended downward of the main body part;
a battery part 130 attachably and detachably coupled to a bottom surface direction of the handle part;
a gear box 140 transmitting the motor output to a bolting driver 145 by increasing or decreasing a motor output of the driving motor part while being dynamically coupled to a motor shaft of the driving motor part at a front of the main body part;
a torque measuring part 155 measuring a torque value based on motor rotation of the driving motor part;
a display part 170 so disposed as to display, on a screen, a real time torque value measured by the torque measuring part; and
a controller 160 controlling the driving of the driving motor part 150 and the display part 170.

2. The torque wrench of claim 1, wherein a display panel of the display part 170 is disposed on a central portion corresponding to a position of the handle part 120 in an upper surface region of the main body part 110.

3. The torque wrench of claim 2, wherein the torque measuring part 155 includes a contact type torque sensor, wherein the bolting driver 145 includes include a square shaped front part to be used for an actual bolting operation and a rear part for being coupled with the gear box 140, and the contact type torque sensor measures a real time torque value by being disposed on an inner accommodation space provided at an inside of the rear part.

4. The torque wrench of claim 2 further comprising a projection part 180 disposed at an inner accommodation space of the main body part 110 for image-projecting the real time torque value measured by the torque measuring part on a predetermined outside image forming surface.

5. The torque wrench of claim 4, wherein the projection part 180 comprises: a light source 181 emitting a light in response to a light source control signal transmitted from the controller 160;
a collimator 183 receiving the light emitted from the light source 181, enlarging the received light by a predetermined ratio, and modulating the enlarged received light to a parallel light;
a two-dimensional spatial light modulator 185 disposed with a plurality of two-dimensional micro-mirrors driven by the modulated control signal transmitted from the controller 160 by receiving the parallel light emitted from the collimator 183 to thereby perform a light modulation for optical projection of the torque value; and
a projection lens 187 projecting the modulated light emitted from the two-dimensional spatial light modulator 185 to an outside through an aperture 114,
and
wherein the aperture 114 is provided on a front center of a staircase part 112 protrusively formed at a rear surface of a display panel-disposed portion in an upper surface region of the main body part 110.
